# EUROPÄISCHE PATENTANMELDUNG

(11) **EP 0 933 883 A2**
(43) Veröffentlichungstag der Anmeldung: **04.08.1999**
(21) Anmeldenummer: 99101044.8
(22) Anmeldetag: 22.01.1999
(51) Int. Cl.: H04B 3/48

(54) **Verfahren und Anordnung zum Bestimmen der Übertragungsfunktion von Übertragungsmedien**

(30) Priorität: 30.01.1998 DE 19803761
(71) Anmelder: SIEMENS AKTIENGESELLSCHAFT, 80333 München (DE)
(72) Erfinder: Schweinberger, Johannes, 82327 Tutzing (DE); Mayer, Helmut, 86916 Kaufering (DE); Lehmann, Uwe, 85221 Dachau (DE); Borst, Karlheinz, 80805 München (DE)

(57) **Zusammenfassung**

In die Übertragungsmedien (SL) werden Rechteckpulse (rp) mit einer definierten Pulsbreite und einer vorgegebenen Wiederholungsrate (fw) eingekoppelt, übertragen, wieder ausgekoppelt und mit der vorgegebenen Wiederholungsrate (fw) zeitlich diskret erfaßt. Aus den aktuell diskret erfaßten Pulsantwortsignalen (pa) werden zeitlich diskrete Pulsantwortsignal-Mittelwerte (amw) gebildet und mit Hilfe der Fouriertransformation die Übertragungsfunktion berechnet. Dieses Verfahren ist beispielsweise für die Bestimmung der Übertragungsfunktion von Stromversorgungsleitungen (SL) vorgesehen.

## Beschreibung

Für die Übertragung von Informationen, beispielsweise zum bzw. vom Internet zu übertragende Informationen, sind im Bereich der anzuschließenden Kommunikationsendgeräte - beispielsweise Personalcomputer - neben den Fernmeldeleitungen eines Fernmeldenetzes zukünftig auch die Stromversorgungsleitungen des Stromversorgungsnetzes mit 220/380V vorgesehen. Hierbei stellt die Übertragungsfunktion eines Übertragungskanals ein Qualitätskriterium dar, das die Konzeption und Dimensionierung der übertragungstechnischen Komponenten für eine Übertragung von Informationen über Stromversorgungsleitungen wesentlich bestimmt. Die Übertragungsfunktion bzw. die übertragungstechnischen Eigenschaften eines über Stromversorgungsleitungen geführten Übertragungskanals werden im wesentlichen durch die Dämpfung - d.h. um wieviel dB ein übertragenes Signal gedämpft wird - und durch den Phasenverlauf bestimmt.

In der Druckschrift IEEE Transactions on electromagnetic Compatibility, vol. EMC-28. No. 4, Nov. 1986 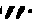 Attenuation of Communication Signals on Residential and Commercial Intrabilding Power-Distribution Circuits" ist ein Experimental System beschrieben, bei dem sinusförmige Signale mit diskreten Frequenzen zwischen 20 und 240 kHz über Leitungskoppler in die Stromversorgungsleitungen, d.h. zwischen den Phasenleiter und den Bezugspotentialleiter, eingekoppelt und über diese Stromversorgungsleitungen übertragen werden. An einem Auskoppelpunkt werden die übertragenen Signale mit Hilfe eines weiteren Leitungskopplers ausgekoppelt und an einem definierten Widerstand der Pegel gemessen. Bei bekanntem Pegel des eingekoppelten Signals kann hiermit die Dämpfung bzw. Pegeldämpfung von übertragenen Signalen mit einer Frequenz zwischen 20 und 240 kHz gemessen werden. Eine Phasenbeziehung des ein- und ausgekoppelten Signals bei unterschiedlichen Übertragungsfrequenzen wird hierbei nicht ermittelt.

Da die zu übermittelnden Informationen zukünftig wesentlich höhere Datenübermittlungsraten und damit erheblich höhere Übertragungsfrequenzen - beispielsweise zwischen 1 und 60 MHz - aufweisen, ist für eine Konzeption von Übertragungseinheiten eine Bestimmung der Übertragungsfunktionen von über Stromversorgungsleitungen, bzw. der über diese geführten Übertragungskanäle erforderlich.

Die der Erfindung zugrundeliegende Aufgabe besteht darin, ein Verfahren zum Bestimmen der Übertragungsfunktion von über Stromversorgungsleitungen, bzw. der über diese geführten Übertragungskanäle anzugeben. Die Aufgabe wird durch die Merkmale des Anspruch 1 gelöst.

Der wesentliche Aspekt des erfindungsgemäßen Verfahren ist darin zu sehen, daß Rechtecksignale mit einer definierten Pulsbreite und einer vorgegebenen Wiederholungsrate in das zu messende Übertragungsmedium eingekoppelt werden und die übertragenen Pulsantwortsignale ausgekoppelt und mit der vorgegebenen Wiederholungsrate zeitlich diskret erfaßt werden. Aus den aktuell und vorhergehend diskret erfaßten Pulsantwortsignalen werden Pulsantwortsignal-Mittelwerte gebildet, aus denen mit Hilfe der diskreten Fouriertransformation die Übertragungsfunktion des Übertragungsmediums berechnet wird. Ein wesentlicher Vorteil des erfindungsgemäßen Verfahrens besteht darin, daß es für die Bestimmung der Übertragungsfunktion unterschiedlichster Medien wie drahtgebundene und drahtlose - z.B. ein Funkkanal - sowie optische Übertragungsmedien -z.B. Lichtwellenleiter - und auch beim Übertragungsmedium Wasser eingesetzt werden kann - Anspruch 2. Ein weiterer wesentlicher Vorteil des erfindungsgemäßen Verfahrens ist darin zu sehen, daß keine Synchronisationsleitungen zwischen dem Einkoppelort und dem Auskoppelort der Signale bzw. Pulse erforderlich sind und somit die Messung vor Ort an beliebigen Punkten der Übertragungsmedien, wie beispielsweise Stromversorgungsleitungen durchgeführt werden kann. Das erfindungsgemäße Verfahren kann durch geeignete Dimensionierung sowohl der Pulsbreite des eingekoppelten Rechtecksignals als auch der Wiederholungsrate an unterschiedlich zu messende Frequenzbereiche, die für die Übertragung von Informationen über Stromversorgungsleitungen vorgesehen sind, angepaßt werden.

Erfindungsgemäß ist die vorgegebene Wiederholungsrate beim Einkoppeln der Rechtecksignale und beim diskreten Erfassen der Pulsantwortsignale gleich und die Wiederholungsrate ist auf die Eigenschaften des Übertragungsmediums abgestimmt - Anspruch 3. Durch gleiche Wiederholungsraten werden die Pulsantwortsignale stets zum gleichen Zeitpunkt erfaßt und die Mittelwertbildung nach Empfang mehrerer Pulsantwortsignale stets zum gleichen Zeitpunkt durchgeführt. Dies bedeutet, daß Störsignale, die nicht mit der vorgegebenen Wiederholungsrate auftreten, aufgrund der vielfach durchgeführten Mittelwertbildung elimeniert werden und ein Pulsantwortsignal ohne die überlagerten Störsignale ermittelt wird. Dieses 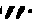 entstörte" zeitlich diskrete Pulsantwortsignal wird mit Hilfe der diskreten Fouriertransformation in die Frequenzebene transformiert. Vorteilhaft basieren gleiche Wiederholungsraten auf einer hochfrequenten frequenzstabilen Pulsfolge, die mit äußerst frequenzstabilen Generatoren erzeugt werden, wobei die vorgegebene Wiederholrate durch Teilung der Pulsfolge bestimmt ist - Anspruch 4. Des weiteren ist die Wiederholungsrate auf die Eigenschaft des Übertragungsmediums abzustimmen, d.h. derart zu bestimmen, daß ein Pulsantwortsignal einschließlich aller Nachschwinger diskret erfaßt werden kann. Dies bedeutet, daß die Wiederholungsrate nicht zu klein bestimmt werden darf, um Überschneidungen der Nachschwinger eines Pulsantwortsignals mit dem folgenden Pulsantwortsignal zu vermeiden. Hierbei wird die Form und die Anzahl der Nachschwinger eines Pulsantwortsignals im wesentlichen durch die Eigenschaften des zu messenden Übertragungsmediums bestimmt.

Erfindungsgemäß werden zumindest annähernd Rechteckpulse gebildet und die Länge der Rechteckpulse ist auf den zu messenden Frequenzbereich des Übertragungsmediums abgestimmt - Anspruch 5. Bei der Transformation des Pulsantwortsignals in die Frequenzebene erfolgt eine Umrechnung des realen Rechtecksignals auf einen idealen Dirac-Stoß.

Bei einer digitalen Realisierung des erfindungsgemäßen Verfahrens wird die diskrete Erfassung der Pulsantwortsignale durch eine Abtastung der empfangenen Pulsantwortsignale mit einer vorgegebenen Abtastfrequenz und eine anschließende Digitalisierung des abgetasteten Pulsantwortsignals durchgeführt - Anspruch 6. Anschließend wird nach jedem aktuell vorliegenden abgetasteten, digitalisierten Pulsantwortsignal ein Abtast-Mittelwert mit den vorhergehend abgetasteten, digitalisierten Pulsantwortsignalen gebildet - Anspruch 7. Aus den zeitlich diskreten Abtast-Mittelwerten werden mit Hilfe einer diskreten Fouriertransformationsroutine frequezabhängige, die Übertragungsfunktion des Übertragungsmediums repräsentierende Dämpfungs- und Phasenwerte berechnet - Anspruch 8.

Gemäß einer weiteren vorteilhaften Ausgestaltung des erfindungsgemäßen Verfahrens werden die abgetasteten, digitalisierten Pulsantwortsignale, die Abtastmittelwerte der abgetasteten, digitalisierten Pulsantwortsignale und die berechneten Dämpfungs- und Phasenwerte mit Hilfe eines Oszillographen visualisiert - Anspruch 9. Durch die optische Anzeige an einem Oszillographen, insbesondere einem Speicheroszillographen, kann sofort eine optische Auswertung der erfaßten Pulse sowie Dämpfungs- und Phasenwerte vorgenommen und eine Bewertung der Übertragungsfunktion des gemessenen Übertragungsmediums, z.B. der gemessenen Stromversorgungsleitung erfolgen.

Weitere vorteilhafte Weiterbildung der Erfindung, insbesondere eine Anordnung zu Ermitteln der Übertragungsfunktion von Übertragungsmedien, z.B. Stromversorgungsleitungen sind den weiteren Ansprüchen zu entnehmen.

Im folgenden wird das erfindungsgemäße Verfahren und eine Anordnung zur Durchführung des erfindungsgemäßen Verfahrens an hand von zwei Zeichnungen näher erläutert. Dabei zeigen
- Figur 1: eine Anordnung zur Durchführung des erfindungsgemäßen Verfahrens und
- Figur 2: in vier Diagrammen die erfingungsgemäßen Signale.

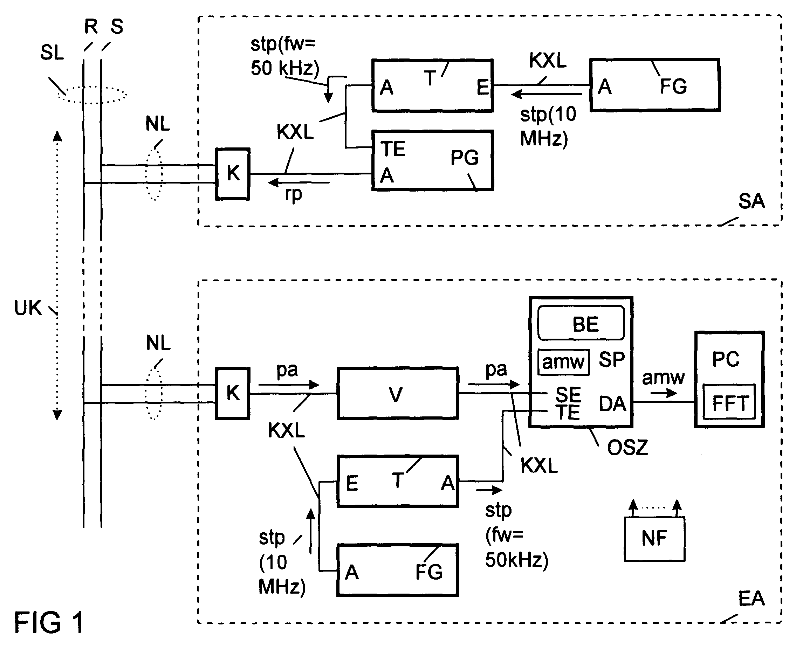

Figur 1 zeigt zwei Stromversorgungsleitungen SL, die Teil eines übergeordneten Stromversorgungsnetzes mit 220/380V - nicht dargestellt - repräsentieren. Da vorzugsweise für die Übertragung von Informationen die Phasenleitungen vorgesehen sind, sind in Figur 1 beispielhaft die Phasenleitung R und die Phasenleitung S angegeben. Diese beiden Phasenleitungen R, S bzw. Stromversorgungsleitungen SL sind für die Übertragung von Informationen vorgesehen und repräsentieren das zu messende Übertragungsmedium bzw. den Übertragungskanal UK - in Figur 1 durch einen mit UK bezeichneten, punktierten Doppelpfeil angedeutet. Die Stromversorgungsleitungen SL sind beispielsweise als in der Erde verlegte Leitungen zwischen Grundstücken und/oder Verteilerstationen des Stromversorgungsnetzes und privaten Grundstücken bzw. Gebäuden geführt.

Die erfindungsgemäße Anordnung zum Ermitteln der Übertragungsfunktion des durch Stromversorgungsleitungen SL realisierten Übertragungskanals UK ist prinzipiell in eine Sendeanordnung SA und eine Empfangsanordnung EA unterteilt. Hierbei ist die Sende- und Empfangsanordnung SA, EA an unterschiedlichen Orten - beispielsweise bei einer Verteilerstation des Stromversorgungsnetzes - und in einem privaten Gebäude - angeordnet. Sowohl die Sende- als auch die Empfangsanordnung SA, EA ist jeweils über eine Netzleitung NL an die beiden Stromversorgungsleitungen SL angeschlossen. In der Sende- bzw. Empfangsanordnung SA, EA ist jeweils die Netzleitung NL mit einem Koppler K verbunden. Der Koppler realisiert sowohl die galvanische Trennung der Stromversorugngsleitungen SL zur Sende- bzw. Empfangsanordnung SA, EA als auch eine Hochpaßfunktion. Hierzu enthält der Koppler K einen Übertrager und seriell geschaltete Kondensatoren - nicht dargestellt. Die Netzleitung NL stellt die Verbindung des Kopplers K mit der Stromversorgungsleitung SL dar. Der Koppler K ist in der Sendeanordnung SA über eine Koaxialleitung KXL mit einem Pulsgenerator PG und in der Empfangsanordnung EA mit einem Verstärker V verbunden.

Ein weiterer Triggereingang TE des Pulsgenerators PG ist über eine Koaxialleitung KXL mit einem Ausgang eines Teilers T verbunden, wobei dessen Eingang E über eine Koaxialleitung KXL auf einen Ausgang A eines frequenzstabilen Generators FG geführt ist.

In der Empfangsanordnung EA ist der Ausgang A des Verstärkers V über eine Koaxialleitung an einen Signaleingang SE eines Speicheroszillographen OSZ angeschlossen. Ein Triggereingang TE des Speicheroszillographen OSZ ist über eine weitere Koaxialleitung KXL mit dem Ausgang A eines Teilers T verbunden, wobei dessen Eingang E ebenfalls über eine Koaxialleitung KXL auf den Ausgang A eines frequenzstabilen Generators FG geführt ist. Ein Datenausgang DA des Speicheroszillographs OSZ ist des weiteren mit einem Personalcomputer PC verbunden, wobei als Datenübertragungsschnittstelle beispielsweise die serielle V.24-Datenschnittstelle vorgesehen ist - nicht dargestellt. Um Störungen des Stromversorgungsnetzes - nicht dargestellt - in den dargestellten Komponenten V,T,FG,OSZ,PC zu vermeiden, ist in der Empfangsanordnung EA jede der dargestellten Komponenten V,T,FG,OSZ,PC über ein Netzfilter mit dem Stromversorgungsnetz verbunden - in Figur 1 sind alle Netzfilter durch ein mit NF bezeichnetes Rechteck mit abgehenden Pfeilen dargestellt.

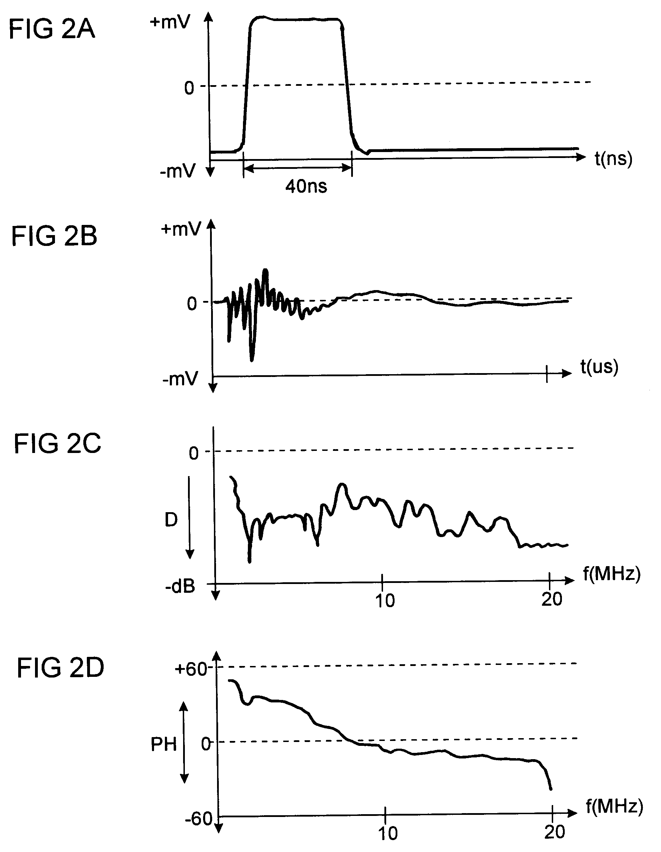

Im folgenden wird das erfindungsgemäße Verfahren anhand der in Figur 2 dargestellten Signale und der in Figur 1 dargestellten Anordnung zur Durchführung des erfindungsgemäßen Verfahrens näher erläutert.

Im frequenzstabilen Generator FG werden Steuerpulse stp mit einer hochstabilen und hochgenauen Frequenz gebildet. Beim Ausführungsbeispiel sei angenommen, daß die Steuerpulse stp mit einer Frequenz von 10 MHz gebildet werden. Um diese hohen Genauigkeiten und Stabilitäten hinsichtlich der Frequenz der Steuerpulse stp zu realisieren, ist ein hochgenauer und frequenzstabiler Generator FG vorgesehen. Die gebildeten Steuerpulse stp mit einer Frequenz von 10 MHz - in Figur 1 durch einen Pfeil mit stp (10 MHz) angedeutet - werden an den Eingang E des Teilers T übermittelt und dort durch 200 dividiert. Dies bedeutet, daß am Ausgang A des Teilers T Steuerpulse stp mit einer Frequenz bzw. mit einer Wiederholungsrate fw von 50 KHz anliegen. Diese hochpräzisen und sehr frequenzstabilen Steuerpulse stp werden an den Triggereingang TE des Impulsgenerators PG geführt. In diesem werden, getriggert durch die Steuerpulse stp Rechteckpulse rp mit einer Pulsdauer von 40 ns gebildet - beispielhaft ist in Figur 2A ein Rechteckpuls rp dargestellt. Die Wiederholrate bzw. Wiederholfrequenz fw der Rechteckpulse rp ist durch die Steuerpulse stp vorgegeben. Die Rechteckpulse rp werden über den Koppler K in den Übertragungskanal UK bzw. die Stromversorgungsleitungen SL eingekoppelt und über diese übertragen. Die in den Kopplern K realisierten Hochpaßfilter sind derart dimensioniert, daß insbesondere die 50 Hz-Stromversorgungssignale bzw. deren Oberwellen unterdrückt werden.

Die über die Stromversorgungsleitungen SL übertragenen Rechteckpulse rp werden in der Empfangsanordnung EA als Pulsantwortsignale pa über den bereits erläuterten Koppler K ausgekoppelt und an den Verstärker V geführt. Durch den Verstärker V werden die ankommenden Pulsantwortsignale pa derart verstärkt, daß sie durch die nachfolgenden Einrichtungen erfaßt bzw. verarbeitet werden können. In Figur 2B ist beispielhaft ein empfangenes Pulsantwortsignal pa dargestellt, wobei durch die übertragungstechnischen Eigenschaften bzw. die Übertragungsfunktion des Übertragungskanals UK und die überlagerten Störsignale das Pulsantwortsignal pa stark verändert bzw. verzerrt wird. Die verstärkten Pulsantwortsignale pa werden an den Signaleingang SE des Speicheroszilloskops OSZ geführt. Mit Hilfe des frequenzstabilen Generators FG und des Teilers T werden wie in der Sendeordnung SA Steuerpulse stp (50 kHz) mit einer Wiederholfrequenz bzw. Wiederholrate fw von 50 kHz gebildet und an einen Trigger-Eingang TE des Speicheroszilliographen OSZ geführt. Erfindungswesentlich ist hierbei, daß die Frequenzstabilität und Frequenzgenauigkeit des Generators FG in der Sende- und Empfangsanordnung SA, EA übereinstimmen, d.h. Steuerpulse stp mit freqenzgleichen und hochstabilen Wiederholungsraten - im Ausführungsbeispiel 50 kHz - erzeugt werden.

Im Speicheroszillograph OSZ wird nach dem Empfang eines Steuerpulses stp die Abtastung des am Signaleingang SE ankommenden Pulsantwortsignals pa begonnen. Der Signaleingang SE wird innerhalb von 10 µs 2500 mal abgetastet, d.h. es werden 2500 Samples bzw. Abtastwerte gebildet und sowohl gespeichert als auch visualisiert, d.h. an der Bildschirmeinrichtung BE des Speicheroszillographen OSZ angezeigt. Diese mehrfache Abtastung des Signaleingangs SE wird nach jedem Empfang eines Steuerpulses stp durchgeführt, d.h. jedes ankommende Pulsantwortsignal pa wird zum gleichen Zeitpunkt abgetastet und die Abtastwerte werden in einem Speicher SP gespeichert und können an der Bildschirmeinrichtung BE des Speicheroszillographen OSZ visualisiert werden. Des weiteren wird bei jeder Abtastung des ankommenden Pulsantwortsignals pa ein Abtastmittelwert mit den vorhergehend empfangenen und zum gleichen Zeitpunkt abgetasteten Pulsantwortsignalen pa gebildet. Für das Ausführungsbeispiel sei angenommen, daß 100 Rechteckpulse rp gesendet und 100 Pulsantwortsignale pa in der Empfangsanordnung EA bzw. im Speicheroszillograph OSZ empfangen und abgetastet wurden. Dies bedeutet, daß 2500 zeitdiskrete Abtastmittelwerte amw im Speicher SP des Speicheroszillographen OSZ berechnet und gespeichert sind. Diese werden über den Datenausgang DA des Speicheroszillographen OSZ an einem Personalcomputer PC übermittelt. Im Personalcomputer PC liegen folglich 2500 zeitdiskrete Abtastmittelwerte amw vor. Diese werden mit Hilfe einer programmtechnisch realisierten Fouriertransformation in frequenzdiskrete Werte transformiert. Für eine derartige Transformation können handelsübliche Programme zur schnellen Fouriertransformation - in der Fachwelt mit FFT-Programme bezeichnet - eingesetzt werden. In Figur 2C und 2D sind die Ergebnisse der Transformation dargestellt. Figur 2C zeigt beispielhaft eine berechnete Übertragungsfunktion bezüglich der Dämpfung D, d.h. der Pegeldämpfung in einem Frequenzbereich zwischen 1 und 20 MHz. In Figur 2D ist beispielhaft eine Übertragungsfunktion hinsichtlich der Phase PH dargestellt. Hierbei ist die Phasendrehung aufgezeigt, die bei der Übermittlung von Signalen in dem angezeigten Frequenzbereich von 1 - 20 MHz auftritt. Die beiden Diagramme in Figur 2C und Figur 2D repräsentieren zusammen die Übertragungsfunktion der Stromversorgungsleitungen SL bzw. des Übertragungskanals UK. Durch diese Übertragungsfunktion sind die Eigenschaften dieses Übertragungskanals UK definiert und stellen Grundlage für zu verwendende bzw. konzipierende Übertragungseinrichtungen für die Übertragung von Informationen über Spannungsversorgungsleitungen SL dar.

Die Erfindung ist nicht auf die Messung von Übertragungsfunktionen von Stromversorgungsleitungen SL beschränkt, sondern kann generell für die Messung der Übertragungsfunktion unterschiedlichster Übertragungsmedien - beispielsweise drahtlose oder drahtgebundene oder optische Übertragungskanäle im Anschlußbereich von Telekommunikationsnetzen - eingesetzt werden.

## Patentansprüche

1. Verfahren zum Bestimmen der Übertragungsfunktion von Übertragungsmedien (SL),
- bei dem Rechteckpulse (rp) mit einer definierten Pulsbreite und einer vorgegebenen Wiederholungsrate (fw) in das zu messende Übertragungsmedium (SL) eingekoppelt werden,
- bei dem Pulsanwortsignale (pa) aus dem Übertragungsmedium (SL) ausgekoppelt und mit der vorgegebenen Wiederholungsrate (fw) zeitlich diskret erfaßt werden,
- bei dem jeweils aus dem aktuell diskret erfaßten Pulsantwortsignal (pa) und den vorhergehend diskret erfaßten Pulsantwortsignalen (pa) zeitlich diskrete PulsantwortsignalMittelwerte (amw) gebildet werden,
- bei dem aus den zeitlich diskreten Pulsantwortsignal-Mittelwerten (amw) mit Hilfe der diskreten Fouriertransformation die Übertragungsfunktion des Übertragungsmediums (SL) berechnet wird.

2. Verfahren nach Anspruch 1, **dadurch gekennzeichnet**,
daß das Übertragungsmedium (SL) als drahtgebundenes oder drahtloses oder optisches Übertragungsmedium oder als Übertragungsmedium Wasser realisiert ist.

3. Verfahren nach Anspruch 1 oder 2, **dadurch gekennzeichnet**,
- daß die vorgegebene Wiederholungsrate (fw) beim Einkoppeln der Rechtecksignale (rp) und beim diskreten Erfassen der Pulsantwortsignale (pa) gleich ist und
- daß die Wiederholungsrate (fw) auf die Eigenschaften des Übertragungsmediums (SL) abgestimmt ist.

4. Verfahren nach Anspruch 3, **dadurch gekennzeichnet**,
daß die Wiederholraten (fw) durch Teilung einer hochpräzisen hochrequenten Folge von Steuerpulsen (stp(10MHz)) bestimmt sind.

5. Verfahren nach einem der Ansprüche 1 bis 4, **dadurch gekennzeichnet**,
daß zumindest annähernd Rechteckpulse (rp) gebildet werden und die Länge der Rechteckpulse (rp) auf den zu messenden Frequenzbereich des Übertragungsmediums (SL) abgestimmt ist.

6. Verfahren nach einem der vorhergehenden Ansprüche, **dadurch gekennzeichnet**,
daß die diskrete Erfassung der Pulsantwortsignale (pa) durch eine Abtastung der empfangenen Pulsantwortsignale (pa) mit einer vorgegebenen Abtastfrequenz und einer anschließenden Digitalisierung des abgetasteten Pulsantwortsignals (a) durchgeführt wird.

7. Verfahren nach Anspruch 6, **dadurch gekennzeichnet**,
daß nach jedem aktuell vorliegenden abgetasteten, digitalisierten Pulsantwortsignal (pa) ein Abtast-Mittelwert (amw) mit den vorhergehend abgetasteten, digitalisierten Pulsantwortsignalen (pa) gebildet wird.

8. Verfahren nach Anspruch 7, **dadurch gekennzeichnet**,
daß aus den zeitlich diskreten Abtast-Mittelwerten (amw) mit Hilfe einer diskreten Fouriertransformation frequenzabhängige, die Übertragungsfunktion des Übertragungsmediums (SL) repräsentierende Dämpfungs- und Phasenwerte (D,PH) berechnet werden.

9. Verfahren nach einem der vorhergehenden Ansprüche, **da**-**durch gekennzeichnet**,
daß die abgetasteten, digitalisierten Pulsantwortsignale (pa), die Abtastmittelwerte (amw) der abgetasteten, digitalisierten Pulsantwortsignale (pa) und die berechneten Dämpfungs- und Phasenwerte (D,PH) mit Hilfe eines Oszillographen (OSZ) visualisiert werden.

10. Verfahren nach einem der vorhergehenden Ansprüche, **da**-**durch gekennzeichnet**,
daß bei einer Messung der Übertragungsfunktion einer Stromversorgungsleitung (SL) die Pulsdauer des Rechtecksignals (rp) mit 40 ns und die Wiederholrate (fw) mit 20 µs gewählt ist.

11. Anordnung zum Bestimmen der Übertragungsfunktion von Übertragungsmedien (SL),
gebildet durch eine Sendeanordhung (SA)
- mit einem über einen Koppler (K) an das Übertragungsmedium (SL) angeschlossenen Pulsgenerator (PG) zum Bilden von Rechteckpulsen (rp),
- mit einem frequenzstabilen Generator (FG) zum Bilden von digitalen hochfrequenten Steuerpulsen (stp(10MHz)),
- mit einem mit dem Generatorausgang (A) und dem Pulsgenerator (PG) verbundenen Teiler (T) zum Bilden von Steuerpulsen (stp(50kHz)) mit einer vorgegebenen Wiederholrate (fw), wobei ein Steuerpuls (stp) im Pulsgenerator (PG) ein Aussen-den eines Rechteckpulses (rp) bewirkt,
- und gebildet durch eine Empfangsanordnung (EA)
- mit einem über einen Koppler (K) an das Übertragungsmedium (SL) angeschlossenen Verstärker (V) zur Pegelanpassung,
- mit einem mit dem Ausgang (A) des Verstärkers (V) verbundenen Speicheroszillographen (OSZ) zur Erfassung, Abtastung und Digitalisierung des Pulsantwortsignals (pa) und zur Berechnung von Abtastmittelwerten (awm), die an eine angeschlossene Datenverarbeitungseinrichtung (PG) übermittelt werden,
- mit in einer in der Datenverarbeitungsanlage (PG) implementierten Fouriertransformationsroutine (FFT) zur Berechnung der die Übertragungsfunktion des gemessenen Übertragungsmediums (SL) repräsentierende Dämpfungs- und Phasenwerte (D,PH),
- mit einem frequenzstabilen Generator (FG) zum Bilden von hochfrequenten Steuerpulsen (stp(10MHz)),
- mit einem mit dem Ausgang (A) des frequenzstabilen Generators (FG) verbundenen Teiler (T) zum Bilden von Steuerpulsen (stp(50kHz)) mit einer vorgegebenen Wiederholrate (fw), wobei die Steuersignale (stp(50kHz)) an den Triggereingang (TE) des Speicheroszillographs (OSZ) geführt sind.

12. Anordnung nach Anspruch 11, **dadurch gekennzeichnet**,
daß die Koppeleinheiten (K) durch Hochpaßfilter realisiert sind, wobei ein Hochpaßfilter durch einen Übertrager und seriell geschaltete Kondensatoren gebildet ist.

13. Anordnung nach Anspruch 11 oder 12, **dadurch gekennzeichnet**,
daß in der Empfangsanordnung (EA) der Generatoren (FG), der Speicheroszillograph (OSZ) und die Datenverarbeitungseinrichtung (PG) über Netzfilter (NF) mit dem Stromversorgungsnetz verbunden sind.
